# EUROPEAN PATENT SPECIFICATION

(11) **EP 1 641 072 B1**
(45) Date of publication and mention of the grant of the patent: **21.11.2007**
(21) Application number: 05020944.4
(22) Date of filing: 26.09.2005
(51) Int. Cl.: H01Q 3/44, H01Q 21/12, H04B 7/08

(54) **Antenna with variable directivity pattern**
Antenne mit variabler Richtcharakteristik
Antenne à directivité variable

(30) Priority: 27.09.2004 JP 2004279260
(43) Date of publication of application: 29.03.2006
(73) Proprietor: ALPS ELECTRIC CO., LTD., Tokyo 145-8501 (JP)
(72) Inventor: Osada, Shigeru Alps Electric Co., Ltd., Tokyo 145-8501 (JP); Suzuki, Takeo Alps Electric Co., Ltd., Tokyo 145-8501 (JP)
(74) Representative: Klunker . Schmitt-Nilson . Hirsch

(56) References cited:
- EP-A- 0 902 498
- EP-A- 1 030 401
- EP-A- 1 035 614
- US-A- 1 964 570
- US-A1- 2002 132 581
- US-B1- 6 757 267
- PATENT ABSTRACTS OF JAPAN vol. 009, no. 212 (E-339), 29 August 1985 (1985-08-29) & JP 60 074801 A (YAGI ANTENNA KK), 27 April 1985 (1985-04-27)

## Description

### BACKGROUND OF THE INVENTION

### 1. Field of the Invention

The present invention relates to a variable directional antenna device that can switch directivity.

### 2. Description of the Related Art

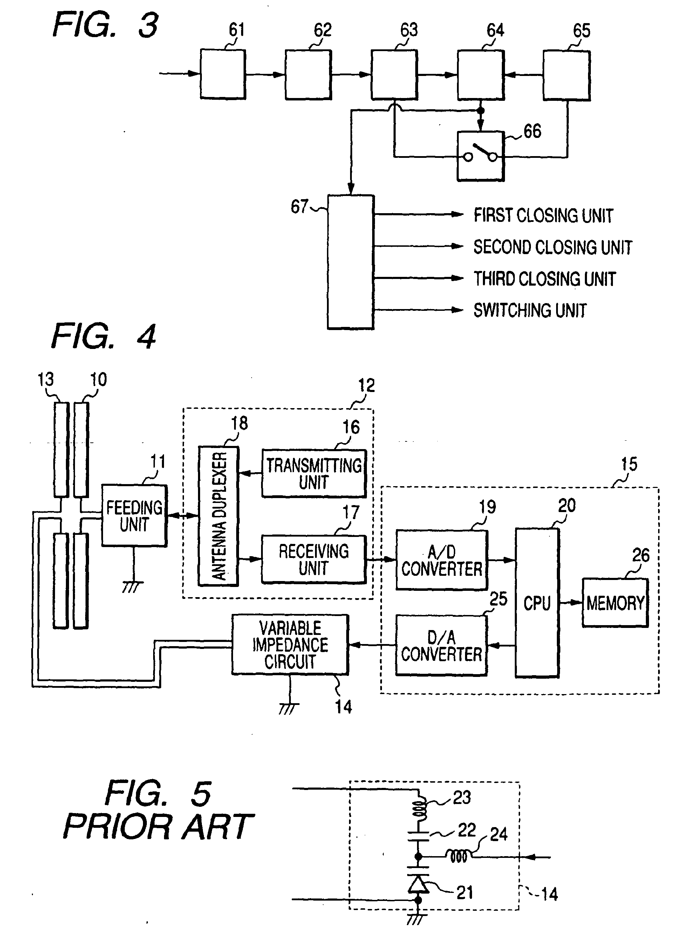

A variable directional antenna device according to the related art will be described with reference to Figs. 4 and 5. In Fig. 4, a first antenna 10 is a dipole antenna that has two rod conductors and resonates at a frequency to be used to have an electrical length of λ/2. The first antenna 10 is connected to a wireless device 12 via a feeding unit 11. The wireless device 12 has a transmitting unit 16, a receiving unit 17, and an antenna duplexer 18 for sharing the antenna at the time of transmitting and receiving signals. The first antenna 10 is connected to the transmitting and receiving units 16 and 17 via the feeding unit 11 and the antenna duplexer 18.

The receiving unit 17 outputs a voltage according to a received field intensity and is connected to an A/D converter 19 provided in a control circuit 15. An output of the A/D converter 19 is connected to a CPU 20. Similarly, a second antenna 13 is a dipole antenna having two rod conductors. The second antenna 13 is disposed in parallel with the first antenna 10 at a small distance from the first antenna 10 and is connected to a variable impedance circuit 14.

As shown in Fig. 5, the variable impedance circuit 14 has a variable capacitance diode 21, a capacitor 22, a coil 23, and a high-frequency choke coil 24. The second antenna 13 is connected in series to the coil 23, the capacitor 22, and the variable capacitance diode 21, and is connected to an output side of a D/A converter 25 in the control circuit 15 via the high-frequency choke coil 24. An input side of the D/A converter 25 is connected to the CPU 20. Further, the CPU is connected to a memory 26.

When a low voltage (output voltage V1 of the D/A converter 25) is applied to both ends of the variable capacitance diode 21, the electrical length of the second antenna 13 is shorter than the original electrical length due to the capacitance of the variable capacitance diode 21, such that the second antenna 13 functions as a wave director. At this time, a strong radiation field can be obtained at the second antenna 13 side. Further, when the voltage applied to the variable capacitance diode is high (V2), the capacitance of the variable capacitance diode 21 decreases, and thus the electrical length of the second antenna 13 is longer, such that the second antenna 13 functions as a reflector. In this case, a strong radiation field can be obtained at the first antenna 10 side. Data D1 and D2 corresponding to the output voltages V1 and V2 of the D/A converter 25 when the second antenna 13 functions as the wave director and the reflector is stored in the memory 26 in advance.

First, the CPU 20 selects data D1 of the memory 26 to cause the second antenna 13 to function as the wave director, such that the output voltage of the D/A converter 25 becomes V1. At this time, the voltage of a received electric wave (first field intensity data) is inputted to the CPU 20 via the A/D converter 19 and then is stored in the memory 26. Next, the CPU 20 selects data D2 of the memory 26 to cause the second antenna 13 to function as the reflector, such that the output voltage of the D/A converter 25 becomes V2. At this time, the voltage of a received electric wave (second field intensity data) is inputted to the CPU 20 via the A/D converter 19 and then is stored the memory 26. The CPU 20 compares first field intensity data to second field intensity data and set the second antenna 13 to function as the wave director or the reflector based on the comparison result (for example, see Japanese Patent No. 3399545 B2 (Figs. 1 and 2)).

The related art variable directional antenna device has directivity of two directions of the first antenna side and the second antenna side. Accordingly, when the variable directional antenna device is mounted on a mobile of which the traveling direction varies constantly, sufficient field intensity cannot be obtained.

US 6 757 267 discloses a variable directional antenna device comprising a first antenna having a capacitive unit located on the first antenna, and a second antenna disposed away from the first antenna and a second capacitive unit, wherein, when the electrical length of the second antenna is equal to that of the first antenna, a signal received by the first antenna and a signal received by the second antenna are synthesized and outputted.

JP 60 074801 discloses an antenna comprising a first loaded antenna and a second loaded antenna.

### SUMMARY OF THE INVENTION

It is an object of the present invention to provide a variable directional antenna device that can switch directivity in four directions.

According to a first aspect of the invention, a variable directional antenna device includes the features of claim 1.

Preferred embodiments are defined by the dependent claims.

According to a fifth aspect of the invention, at least the first loaded antenna may resonate in a UHF band.

### BRIEF DESCRIPTION OF THE DRAWINGS

Fig. 1 is a circuit diagram showing a configuration of a variable directional antenna device according to the invention;
Fig. 2A is a diagram showing a radiation field directional property of the variable directional antenna device according to the invention;
Fig. 2B is a diagram showing a radiation field directional property of the variable directional antenna device according to the invention;
Fig. 2C is a diagram showing a radiation field directional property of the variable directional antenna device according to the invention;
Fig. 3 is a diagram showing a control circuit for controlling the variable directional antenna device according to the invention;
Fig. 4 is a circuit diagram showing a configuration of a variable directional antenna device according to the related art; and
Fig. 5 is a diagram showing a variable impedance circuit loaded on the variable directional antenna device according to the related art.

### DESCRIPTION OF THE PREFERRED EMBODIMENT

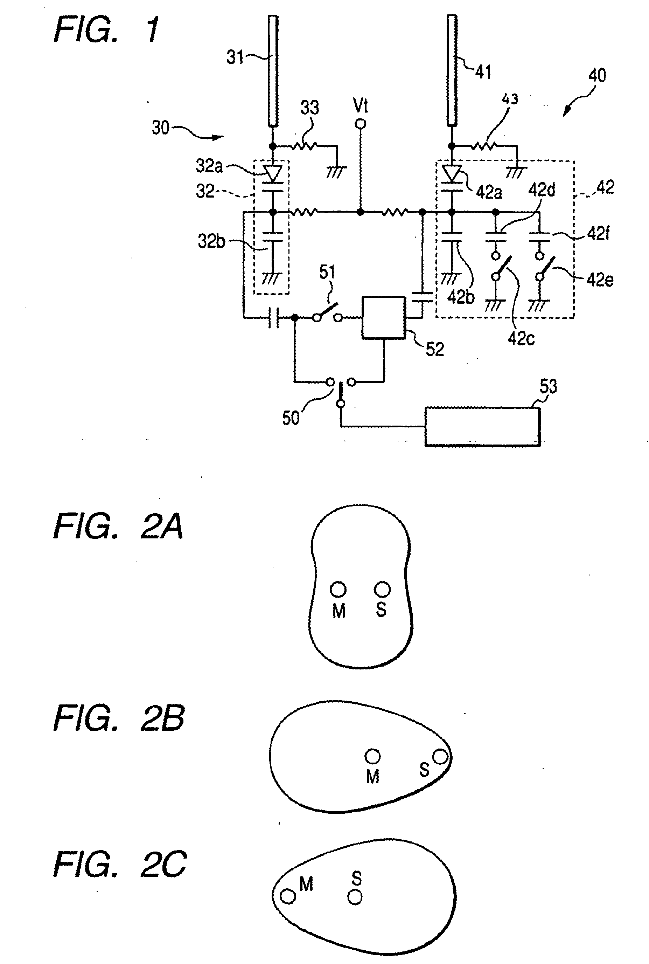

A variable directional antenna device of the invention will now be described with reference to Figs. 1 and 2. A first loaded antenna 30 has a first antenna 31 and a first capacitive unit 32, which is loaded on the first antenna 31. The first capacitive unit 32 is connected between one end of the first antenna 31 and a ground, and has a first variable capacitance diode 32a of which an anode is connected to one end of the first antenna 31 and a first capacitive element 32b that is connected between a cathode of the first variable capacitance diode 32a and the ground. The anode of the first variable capacitance diode 32a is grounded in direct-current wise via a resistor 33.

Further, a second loaded antenna 40 has a second antenna 41 that is disposed away from the first antenna 31 and a second capacitive unit 42 that is loaded on the second antenna 41. The second capacitive unit 42 is connected between one end of the second antenna 41 and the ground, and has a second variable capacitance diode 42a of which an anode is connected to the one end of the second antenna 41, a second capacitive element 42b that is connected between a cathode of the second variable capacitance diode 42a and the ground, a third capacitive element 42d that is connected in parallel to the second capacitive element 42b via a first closing unit 42c, and a fourth capacitive element 42f that is connected in parallel to the second capacitive element 42b via a second closing unit 42e. The anode of the second variable capacitance diode 42a is grounded in direct-current wise via a resistor 43.

The connection point between the cathode of the first variable capacitance diode 32a and the first capacitive element 32b is connected to one input terminal of a switching unit 50 and simultaneously is connected to one input terminal of a synthesizing unit 52 via a third closing unit 51. Further, the connection point between the cathode of the second variable capacitance diode 42a and the second capacitive element 42b is connected to the other input terminal of the synthesizing unit 52. An output terminal of the synthesizing unit 52 is connected to the other input terminal of the switching unit 50. Further, an output terminal of the switching unit 50 is connected to a receiving circuit 53. The receiving circuit 53 has, for example, a UHF tuner and the like.

In the first loaded antenna 30 and the second loaded antenna 40, the first antenna 31 and the second antenna 41 have the same electrical length, and the sum of the capacitance value of the second capacitive element 42b and the capacitance value of the third capacitive element 42d is the same as the capacitance value of the first capacitive element 32b. Further, the first and second variable capacitance diodes 32a and 42a have the same characteristics. Further, the cathode of the first variable capacitance diode 32a and the cathode of the second variable capacitance diode 42a are applied with the same tuning voltage Vt. The tuning voltage is variable.

Figs. 2A to 2C show directivity of radiation field intensity by the first and the second loaded antennas 30 and 40 in a plane perpendicular to the axis directions of the first and second antennas 31 and 41. In Fig. 2, M and S indicate the positions of the first and second antennas 31 and 41, respectively.

Here, when the first and second closing units 42c and 42e are turned off (opened) together, the resonant frequency of the second loaded antenna 40 is higher than that of the first loaded antenna 30, and the electrical length of the second loaded antenna 40 is shorter than that of the first loaded antenna 30. Accordingly, the second loaded antenna 40 functions as a wave director, such that the radiation field intensity is larger at the second antenna 41 side (S side), as shown in Fig. 2C. In this case, the third closing unit 51 is turned off, such that the output terminal of the switching unit 50 is switched to the one input terminal (at the first loaded antenna 30 side).

Further, when the first closing unit 42c and the second closing unit 42 are turned on (shorted) together, the resonant frequency of the second loaded antenna 40 is lower than that of the first loaded antenna 30, and the electrical length of the second loaded antenna 40 is longer than that of the first loaded antenna 30. Accordingly, the second loaded antenna 40 functions as a reflector, such that the radiation field intensity is larger at the first antenna 31 side (M side), as shown in Fig. 2B. In this case, the third closing unit 51 is turned off, such that the output terminal of the switching unit 50 is switched to the one input terminal (the first loaded antenna 30 side).

Further, when the first closing unit 42c is turned on and the second closing unit 42e is turned off, the first loaded antenna 30 and the second loaded antenna 40 have the same resonant frequency. Accordingly, the electrical length of the second loaded antenna 40 is equal to that of the first loaded antenna 30. In this case, a signal received by the first loaded antenna 30 and a signal received by the second loaded antenna 40 are synthesized to suppress a radiation field at the first antenna 31 side and a radiation field at the second antenna 41 side, such that radiation field intensity is larger in a direction perpendicular to a line connecting the position of the first antenna 31 to the position of the second antenna 41, as shown in Fig. 2A. Accordingly, in this case, the third closing unit 51 is turned on, and the output terminal of the switching unit 50 is switched to the other input terminal (the synthesizing unit 52 side).

Therefore, the variable directional antenna device can be switched to have directivity in four directions. According to the above-described configuration, an antenna device suitable for receiving television signals when being mounted on a mobile or the like can be realized.

Further, since the first loaded antenna 30 and the second loaded antenna 40 have the first variable capacitance diode 32a and the second variable capacitance diode 42a, respectively, the resonant frequencies of the loaded antennas 30 and 40 vary in conjunction with each other by changing the tuning voltage. Therefore, even when a receiving frequency varies, the pattern of radiation field intensity of Fig. 2 can be maintained.

Fig. 3 shows the configuration of a control circuit for automatically controlling opening or closing of the first to third closing units 42c, 42e, and 51, and switching of the switching unit 50. As shown in Fig. 3, the control circuit includes a detector circuit 61, an A/D converter 62, a temporary register 63, a CPU 64, a MAX data register 65, a data switch 66, an antenna control circuit 67, and the like. The CPU 64 has a comparing unit. Further, the antenna control unit 67 controls the first to third closing units 42c, 42e, and 51 and the switching unit 50 based on data from the CPU 64.

In the following description of a control method, a case in which the resonant frequency of the second loaded antenna 40 is equal to that of the first loaded antenna 30 is referred to as an A mode. Further, a case in which the resonant frequency of the second loaded antenna 40 is lower than that of the first loaded antenna 30 (a case in which the second loaded antenna 40 functions as the reflector) is referred to as a B mode. In addition, a case in which the resonant frequency of the second loaded antenna 40 is higher than that of the first loaded antenna 30 (a case in which the second loaded antenna 40 functions as the wave director) is referred to as a C mode.

First, the CPU 64 sets an AGC voltage applied to an amplifier (not shown) in the receiving circuit 53 (see Fig. 1) to a constant value, and simultaneously clears the temporary register 63 and the MAX data register 65. Then, the CPU 64 outputs data for the A mode to the antenna control circuit 67 to set the A mode first, such that the first to third closing units 42c, 42e, and 51 are turned on and the output terminal of the switching unit 50 is switched to the one input terminal (the first loaded antenna 30 side).

A signal received in the A mode is detected by the detector circuit 61 and then is converted into a digital signal by the A/D converter 62. The converted digital signal is stored the temporary register 63 as receiving intensity data. Then, receiving intensity data stored in the temporary register 63 is compared to data of the MAX data register 65. At this time, since the MAX data register 65 has been cleared, receiving intensity data of the temporary register 63 is larger. Subsequently, the CPU 64 turns on the data switch 66 so as to transfer receiving intensity data of the temporary register 63 to the MAX data register 65.

Next, when the CPU 64 is switched to the B mode, the first and second closing units 42c and 42e are tuned on, the third closing unit 51 is turned off, and the output terminal of the switching unit 50 is switched to the other input terminal (the synthesizing unit 52 side). Similarly, receiving intensity data in the B mode is stored in the temporary register 63 and then is compared to data of the MAX data register 65 (in which receiving intensity data in the A mode is stored). As the comparison result, when receiving intensity data in the B mode is larger than data of the MAX data register 65, receiving intensity data is stored in the MAX data register 65.

Similarly, receiving intensity data in the C mode is compared to data of the MAX data register 65, larger data of them is stored in the MAX data register 65. Since data stored in the MAX data register 65 for the last time is the maximum value, the CPU 64 outputs switching data of the mode corresponding to data to the antenna control circuit 67, and the antenna control circuit 67 controls opening or closing of the closing units 42c, 42e, and 51, and switching of the switching unit 50 based on data. The variable directional antenna device can constantly maintain the best receiving state by repeatedly performing the above-described sequences.

According to the first aspect of the invention, the variable directional antenna device includes the first loaded antenna that has the first antenna and the first capacitive unit loaded on the first antenna, and the second loaded antenna that has the second antenna disposed away from the first antenna and the second capacitive unit loaded on the second antenna. The electrical length of the second loaded antenna is longer or shorter than, or equal to that of the first loaded antenna by switching the capacitance value of the second capacitive unit. When the electrical length of the second loaded antenna is equal to that of the first loaded antenna, the signal received by the first loaded antenna and the signal received by the second loaded antenna are synthesized. Therefore, when the second loaded antenna is operated as a wave director or a reflector by causing the electrical length of the second loaded antenna to be longer or shorter than that of the first loaded antenna, a strong radiation field is obtained at the first or second antenna side. Further, when the electrical length of the second loaded antenna is equal to that of the first loaded antenna, a strong radiation field is obtained in a direction perpendicular to a direction in which the first and second antennas are arranged. Therefore, a radiation field in four directions is obtained, thereby realizing an antenna device suitable for a mobile receiver.

Further, according to the second aspect of the invention, in the first capacitive unit, the first variable capacitance diode is provided so as to be interposed between the first antenna and the ground, and, in the second capacitive unit, the second variable capacitance diode is provided so as to be interposed the second antenna and the ground. Further, the first variable capacitance diode and the second variable capacitance diode are applied with the same voltage for switching the capacitance values of the first and second variable capacitance diodes. Therefore, the variable directional antenna device can receive signals over a broad band, such as television broadcasting signals, by continuously changing the resonant frequency of each of the loaded antennas.

Further, according to the third aspect of the invention, in the first capacitive unit, the first capacitive element is provided so as to be interposed between the first variable capacitance diode and the ground. In the second capacitive unit, the second capacitive element is provided so as to be interposed between the second variable capacitance diode and the ground, the third capacitive element is provided to be connected in parallel with the second capacitive element via the first closing unit, and the fourth capacitive element is provided to be connected in parallel with the second capacitive element via the second closing unit. Further, the sum of the capacitance value of the second capacitive element and the capacitance value of the third capacitive element is made to be equal to the capacitance value of the first capacitive element. In addition, the first and second closing units are turned on or off together, or the first closing unit is turned on and simultaneously the second closing unit is turned off. Therefore, the electrical length of the second loaded antenna can be made to be shorter or longer than, or equal to that of the first loaded antenna.

Further, according to the fourth aspect of the invention, the variable directional antenna device further includes the switching unit of which the output terminal is connected to the receiving circuit, the synthesizing unit that has the output terminal and the two input terminals, and the third closing unit that is connected between the first loaded antenna and the one input terminal of the synthesizing unit. Further, when the other input terminal of the synthesizing unit is connected to the second loaded antenna, and the first and second closing units are turned on or off together, the third closing unit is turned off and simultaneously the output terminal of the switching unit is connected to the first loaded antenna. Further, when the first closing unit is turned on and simultaneously the second closing unit is turned off, the third closing unit is turned on and simultaneously the output terminal of the switching unit is connected to the output terminal of the synthesizing unit. Therefore, a signal having strong field intensity can be constantly inputted to the receiving circuit.

According to the fifth aspect of the invention, at least the first loaded antenna is resonated in a UHF band. Therefore, an antenna device suitable for receiving of television signals can be obtained.

## Claims

1. A variable directional antenna device comprising:
a first loaded antenna (30) that has a first antenna (31) and a first capacitive unit (32) loaded on the first antenna (31); and
a second loaded antenna (40) that has a second antenna (41) disposed away from the first antenna (31) and a second capacitive unit (42) which has capacitances and switching units loaded on the second antenna (41), wherein
an electrical length of the second loaded antenna (40) is longer or shorter than, or equal to that of the first loaded antenna (30) by switching the capacitances, and
when the electrical length of the second loaded antenna (40) is equal to that of the first loaded antenna (30), a signal received by the first loaded antenna (30) and a signal received by the second loaded antenna (40) are synthesized and outputted.

2. The variable directional antenna device according to claim 1,
**characterized in that**, in the first capacitive unit (32), a first variable capacitance diode (32a) is provided so as to be interposed between the first antenna (31) and a ground,
in the second capacitive unit (42), a second variable capacitance diode (42a) is provided so as to be interposed the second antenna (41) and the ground, and
the first variable capacitance diode (32a) and the second variable capacitance diode (42a) are applied with the same voltage for changing the capacitance values thereof.

3. The variable directional antenna device according to claim 2,
**characterized in that**, in the first capacitive unit (32), a first capacitive element (32b) is provided so as to be interposed between the first variable capacitance diode (32a) and the ground,
in the second capacitive unit (42), a second capacitive element (42b) is provided so as to be interposed between the second variable capacitance diode (42a) and the ground, a third capacitive element (42d) is provided so as to be connected in parallel to the second capacitive element (42b) via a first switching unit (42c), and a fourth capacitive element (42f) is provided so as to be connected in parallel to the second capacitive element (42b) via a second switching unit (42e),
the sum of the capacitance value of the second capacitive element (42b) and the capacitance value of the third capacitive element (42d) is made to be equal to the capacitance value of the first capacitive element (32b), and
the first switching unit (42c) and the second switching unit (42e) are turned on or off together, or the first switching unit (42c) is turned on and simultaneously the second switching unit (42e) is turned off.

4. The variable directional antenna device according to claim 3, further comprising:
a selecting unit (50) of which an output terminal is connected to a receiving circuit (53);
an adding unit (52) having an output terminal and two input terminals; and
a third switching unit (51) that is connected between the first loaded antenna and one input terminal of the adding unit (52),
**characterized in that**, when the other input terminal of the adding unit (52) is connected to the second loaded antenna (40), and the first switching unit (42c) and the second switching unit (42e) are turned on or off together, the third switching unit (51) is turned off and simultaneously the output terminal of the selecting unit (50) is connected to the first loaded antenna (30), and
when the first switching (42c) is turned on and simultaneously the second switching unit (42e) is turned off, the third switching unit (51) is turned on and simultaneously the output terminal of the selecting unit (50) is connected to the output terminal of the adding unit (52).

5. The variable directional antenna device according to any one of claims 2 to 4,
**characterized in that** at least the first loaded antenna (30) resonates in a UHF band.

## Patentansprüche

1. Antenne mit variabler Richtcharakteristik, umfassend:
eine erste belastete Antenne (30), die eine erste Antenne (31) und eine erste kapazitive Einheit (32), die die erste Antenne (31) belastet, aufweist; und
eine zweite belastete Antenne (40), die eine entfernt von der ersten Antenne (31) angeordnete zweite Antenne (41) und eine die zweite Antenne (41) belastende zweite kapazitive Einheit (42), die Kapazitäten und Schalteinheiten enthält, aufweist, wobei
eine elektrische Länge der zweiten belasteten Antenne (40) länger oder kürzer ist als oder gleichlang ist wie die erste belastete Antenne (30), indem die Kapazitäten geschaltet werden, und
dann, wenn die elektrische Länge der zweiten belasteten Antenne (40) derjenigen der ersten belasteten Antenne (30) gleicht, ein von der ersten belasteten Antenne (30) empfangenes Signal und ein von der zweiten belasteten Antenne (40) empfangenes Signal synthetisiert und ausgegeben werden.

2. Antennenvorrichtung nach Anspruch 1, **dadurch gekennzeichnet, dass** in der ersten kapazitiven Einheit (32) eine erste veränderliche Kapazitätsdiode (32a) vorgesehen ist, die zwischen der ersten Antenne (31) und Masse liegt,
dass in der zweiten kapazitiven Einheit (42) eine zweite veränderliche Kapazitätsdiode (42a) vorgesehen ist, die zwischen der zweiten Antenne (41) und Masse liegt, und dass die erste veränderliche Kapazitätsdiode (32a) und die zweite veränderliche Kapazitätsdiode (42a) mit der gleichen Spannung gespeist werden, um ihre Kapazitätswerte zu ändern.

3. Antennenvorrichtung nach Anspruch 2, **dadurch gekennzeichnet, dass** in der ersten Kapazitätseinheit (32) eine erstes kapazitives Element (32b) vorgesehen ist, welches zwischen der ersten veränderlichen Kapazität (32a) und Masse liegt,
in der zweiten Kapazitätseinheit (42) ein zweites kapazitives Element (42b) vorgesehen ist, welches zwischen der zweiten veränderlichen Kapazitätsdiode (42a) und Masse liegt, ein drittes kapazitives Element (42d) vorgesehen ist, welches über eine erste Schalteinheit (42c) parallel zu dem zweiten kapazitiven Element (42b) schaltbar ist, und ein viertes kapazitives Element (42f) vorgesehen ist, welches über eine zweite Schalteinheit (42e) parallel zu dem zweiten kapazitiven Element (42b) schaltbar ist,
die Summe der Kapazitätswerte des zweiten kapazitiven Elements (42b) und des dritten kapazitiven Elements (42d) gleich dem Kapazitätswert des ersten kapazitiven Elements (32b) gemacht wird, und
die erste Schalteinheit (42c) und die zweite Schalteinheit (42e) gemeinsam ein- oder ausgeschaltet werden, oder die erste Schalteinheit (42c) eingeschaltet und gleichzeitig die zweite Schalteinheit (42e) ausgeschaltet wird.

4. Antennenvorrichtung nach Anspruch 3, weiterhin umfassend:
eine Wähleinheit (50), von der ein Ausgangsanschluss an eine Empfangsschaltung (53) gekoppelt ist;
eine Addiereinheit (52), die mit einem Ausgangsanschluss und zwei Eingangsanschlüssen versehen ist; und
eine dritte Schalteinheit (51), die zwischen der ersten belasteten Antenne und einem Eingangsanschluss der Addiereinheit (52) liegt,
**dadurch gekennzeichnet, dass** dann, wenn der andere Eingangsanschluss der Addiereinheit (52) an die zweite belastete Antenne (40) angeschlossen ist und die erste Schalteinheit (42c) und die zweite Schalteinheit (42e) gemeinsam ein- oder ausgeschaltet werden, die dritte Schalteinheit (51) ausgeschaltet und gleichzeitig der Ausgangsanschluss der Wähleinheit (50) an die erste belastete Antenne (30) gekoppelt wird, und
dann, wenn die erste Schalteinheit (42c) eingeschaltet und gleichzeitig die zweite Schalteinheit (42e) ausgeschaltet wird, die dritte Schalteinheit (51) eingeschaltet und gleichzeitig der Ausgangsanschluss der Wähleinheit (50) an den Ausgangsanschluss der Addiereinheit (52) gekoppelt wird.

5. Antennenvorrichtung nach einem der Ansprüche 2 bis 4, **dadurch gekennzeichnet, dass** mindestens die erste belastete Antenne (30) in einem UHF-Band in Resonanz ist.

## Revendications

1. Dispositif d'antenne à directivité variable comprenant :
une première antenne chargée (30) comportant une première antenne (31) et une première unité capacitive (32) chargée sur la première antenne (31) ; et
une seconde antenne chargée (40) comportant une seconde antenne (41) éloignée de la première antenne (31) et une seconde unité capacitive (42) comportant des capacités et des unités de commutation, chargée sur la seconde antenne (41), dans lequel
la longueur électrique de la seconde antenne chargée (40) est plus grande ou plus petite que, ou égale à celle de la première antenne chargée (30) en commutant les capacités, et
lorsque la longueur électrique de la seconde antenne chargée (40) est égale à celle de la première antenne chargée (30), un signal reçu par la première antenne chargée (30) et un signal reçu par la seconde antenne chargée (40) sont synthétisés et délivrés en sortie.

2. Dispositif d'antenne à directivité variable selon la revendication 1,
**caractérisé en ce que**, dans la première unité capacitive (32) est prévue une première diode à capacité variable (32a) de sorte à être intercalée entre la première antenne (31) et la masse,
dans la seconde unité capacitive (42) est prévue une seconde diode à capacité variable (42a) de sorte à être intercalée entre la seconde antenne (41) et la masse, et
on applique la même tension à la première diode à capacité variable (32a) et à la seconde diode à capacité variable (42a), pour modifier leur valeur de capacité.

3. Dispositif d'antenne à directivité variable selon la revendication 2,
**caractérisé en ce que**, dans la première unité capacitive (32), un premier élément capacitif (32b) est prévu de sorte à être intercalé entre la première diode à capacité variable (32a) et la masse,
dans la seconde unité capacitive (42), un deuxième élément capacitif (42b) est prévu de sorte à être intercalé entre la seconde diode à capacité variable (42a) et la masse, un troisième élément capacitif (42d) est prévu de sorte à être connecté en parallèle avec le deuxième élément capacitif (42b) par l'intermédiaire d'une première unité de commutation (42c), et un quatrième élément capacitif (42f) est prévu de sorte à être connecté en parallèle avec le deuxième élément capacitif (42b) par l'intermédiaire d'une seconde unité de commutation (42e),
on rend la somme de la valeur de capacité du deuxième élément capacitif (42b) et de la valeur de capacité du troisième élément capacitif (42d) égale à la valeur de capacité du premier élément capacitif (32b), et
la première unité de commutation (42c) et la seconde unité de commutation (42e) sont activées ou désactivées en même temps, ou la première unité de commutation (42c) est activée et en même temps, la seconde unité de commutation (42e) est désactivée.

4. Dispositif d'antenne à directivité variable selon la revendication 3, comprenant en outre :
une unité de sélection (50) dont la borne de sortie est connectée à un circuit de réception (53) ;
une unité d'addition (52) ayant une borne de sortie et deux bornes d'entrée ; et
une troisième unité de commutation (51) connectée entre la première antenne chargée et une borne d'entrée de l'unité d'addition (52),
**caractérisé en ce que**, lorsque l'autre borne d'entrée de l'unité d'addition (52) est connectée à la seconde antenne chargée (40), et que la première unité de commutation (42c) et la seconde unité de commutation (42e) sont activées ou désactivées en même temps, la troisième unité de commutation (51) est désactivée et en même temps, la borne de sortie de l'unité de sélection (50) est connectée à la première antenne chargée (30), et
lorsque la première unité de commutation (42c) est activée et en même temps, que la seconde unité de commutation (42e) est désactivée, la troisième unité de commutation (51) est activée et en même temps, la borne de sortie de l'unité de sélection (50) est connectée à la borne de sortie de l'unité d'addition (52).

5. Dispositif d'antenne à directivité variable selon l'une quelconque des revendications 2 à 4,
**caractérisé en ce qu'**au moins la première antenne chargée (30) résonne dans la bande des UHF.
